(19) Europäisches Patentamt
European Patent Office
Office européen des brevets

(11) EP 1 141 036 B1

(12) **EUROPÄISCHE PATENTSCHRIFT**

(45) Veröffentlichungstag und Bekanntmachung des Hinweises auf die Patenterteilung:
**25.02.2004 Patentblatt 2004/09**

(21) Anmeldenummer: **99963303.5**

(22) Anmeldetag: **16.11.1999**

(51) Int Cl.[7]: **C08F 8/04**, C08F 8/00

(86) Internationale Anmeldenummer:
**PCT/EP1999/008793**

(87) Internationale Veröffentlichungsnummer:
**WO 2000/032646 (08.06.2000 Gazette 2000/23)**

# (54) BLOCKCOPOLYMERE AUF VINYLCYCLOHEXANBASIS

VINYLCYCLOHEXANE-BASED BLOCK COPOLYMERS

COPOLYMERES SEQUENCES A BASE DE VINYLCYCLOHEXANE

(84) Benannte Vertragsstaaten:
**AT BE CH CY DE DK ES FI FR GB GR IE IT LI LU MC NL PT SE**

(30) Priorität: **28.11.1998 DE 19855062**

(43) Veröffentlichungstag der Anmeldung:
**10.10.2001 Patentblatt 2001/41**

(73) Patentinhaber:
- **Bayer Aktiengesellschaft**
  **51368 Leverkusen (DE)**
- **TEIJIN LIMITED**
  **Osaka-shi Osaka 541-0054 (JP)**

(72) Erfinder:
- **CHEN, Yun**
  **D-47800 Krefeld (DE)**
- **BRUDER, Friedrich, Karl**
  **D-47800 Krefeld (DE)**
- **WEGE, Volker**
  **D-47799 Krefeld (DE)**
- **DOUZINAS, Konstadinos**
  **D-51061 Köln (DE)**
- **DUJARDIN, Ralf**
  **Novi, MI 48374 (US)**

(74) Vertreter: **Klimiuk-Japadita, Meike**
**Bayer AG,**
**Konzernbereich RP**
**Patente und Lizenzen**
**51368 Leverkusen (DE)**

(56) Entgegenhaltungen:
- **DATABASE WPI Section Ch, Week 198122 Derwent Publications Ltd., London, GB; Class A18, AN 1981-39131D XP002134294 & JP 56 038338 A (ASAHI CHEM IND CO LTD), 13. April 1981 (1981-04-13)**
- **DATABASE WPI Section Ch, Week 199139 Derwent Publications Ltd., London, GB; Class A18, AN 1991-284775 XP002134295 & JP 03 188114 A (KURARAY CO LTD), 16. August 1991 (1991-08-16)**
- **SIERRA C A ET AL: "Thermal and mechanical properties of poly-(styrene-b-ethylene-co-buty lene-b-styrene) triblock copolymers" POLYMER,GB,ELSEVIER SCIENCE PUBLISHERS B.V, Bd. 38, Nr. 17, 1. August 1997 (1997-08-01), Seiten 4325-4335, XP004083082 ISSN: 0032-3861**
- **STOREY R F ET AL: "Morphology and physical properties of poly(styrene-b-isobutylene-b-st yrene) block copolymers" POLYMER,GB,ELSEVIER SCIENCE PUBLISHERS B.V, Bd. 37, Nr. 14, 1. Januar 1996 (1996-01-01), Seiten 2925-2938, XP004069281 ISSN: 0032-3861**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Blockcopolymere überwiegend auf Vinylcyclohexanbasis und ein Verfahren zu deren Herstellung. Die Blockcopolymere lassen sich durch Extrusion oder Spritzguß zu Formkörpem verarbeiten. Die daraus resultierten Formkörper zeichnen sich durch ihre hohe Wärmeformbeständigkeit, gute mechanische Eigenschaften, hohe Transparenz im sichtbaren und nahen UV-Bereich, besonders geringe Doppelbrechung und Wasseraufnahme aus.

Das hydrierte Polystyrol (Polyvinylcyclohexan) wurde erstmalig von Hermann Staudinger im Jahr 1929 beschrieben. Das Material zeigt sehr niedrige Doppelbrechung, sehr geringe Wasserabsorption sowie ausreichende Wärmeformbeständigkeit und eignet sich besonders als Substratmaterial für optische Datenspeicher. In US-A 4 911 966 wird die Verwendung des Hydrierungsprodukts von Polystyrol als Substratmaterial für optische Disks beschrieben. Verfahren, die zu hydriertem Polystyrol verschiedener Mikrostrukturen führen, werden in WO 94/21694 und US-A 5,352,744 beschrieben, wobei spezielle Katalysatoren eingesetzt werden. Verfahren zur Hydrierung von ataktischem Polystyrol zu ataktischem hydriertem Polystyrol durch die Verwendung spezieller Katalysatoren sind bekannt (EP-A 0 322 731, EP-A 0 423 100, US-A 5,654,253; US-A 5,612,422; WO 96/34896).

WO 94/21694 beschreibt ein Verfahren zur vollständigen Hydrierung von alkenylaromatischen Polymeren und Poly(alkenylaromatischen)-/Polydien Blockcopolymeren durch heterogene Katalyse.

Vollständig hydrierte Blockcopolymere aus Styrolderivaten und konjugierten Dienen mit einer Di- und Triblockstruktur sind auch bekannt. Im Vergleich zu hydriertem Polystyrol weisen derartige vollgesättigte Blockcopolymere einerseits verbesserte mechanische Eigenschaften (erhöhte Schlagzähigkeit und Bruchdehnung), andererseits aber niedrigere Lichttransmission und Wärmeformbeständigkeit auf.

Auf Monomerbasis von Styrolen und konjugierten Dienen sind teilweise oder vollständig hydrierte Diblock- und Triblockcopolymere (dort als SB, SI, SBS oder SIS symbolisiert, wobei S, B und I jeweils für Styrol, Butadien und Isopren stehen) mit einheitlichem Blockbaustein ("pure block") sowie gemischte Diblockcopolymere (dort als $SB^M$ und $SI^M$ symbolisiert) mit einem aus Dien und Styrol bestehendem Weichblock beschrieben (JP 10 116 442-A, GB 1 156 932, Polymer Preprints, (1972), 13(1), 427-432; Advan. Chem. Ser. (1973) No. 129, 27-38).

Im Vergleich zu Polyvinylcyclohexan weisen die dort beschriebenen Blockcopolymere mit mindestens 70 % Vinylcyclohexan-Anteil erhöhte Bruchdehnung auf, werden als steif und transparent beschrieben. Die angegebenen Daten von Lichttransmission (75 - 82 %) weisen jedoch auf eine recht hohe Trübung hin.

EP-A 505 110 beschreibt Blendsysteme aus hydrierten Blockcopolymeren von Styrol und konjugiertem Dien und hydriertem Polystyrol, wobei die olefinischen Doppelbindungen vollständig und die Aromaten zu 60 - 80 % hydriert sind, und deren Verwendung als Substratmaterial für optische Disks.

Gegenstand der vorliegenden Erfindung ist ein Blockcopolymer mit mindestens drei Blöcken, das mindestens einen Hartblock und mindestens einen Weichblock enthält, wobei der Hartblock mindestens 65, vorzugsweise 70, insbesondere 75, ganz besonders bevorzugt 80, insbesondere 84 Gew.-% Wiederholungseinheiten der allgemeinen Formel (I),

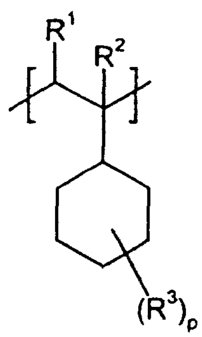

(I)

worin

$R^1$ und $R^2$ unabhängig voneinander für Wasserstoff oder $C_1$-$C_6$-Alkyl, vorzugsweise $C_1$-$C_4$-Alkyl bedeuten,

$R^3$ für Wasserstoff oder für $C_1$-$C_6$-Alkyl, vorzugsweise $C_1$-$C_4$-Alkyl, insbesondere Methyl und/oder Ethyl, oder für anneliertes Alkylen, vorzugsweise $C_3$- oder $C_4$-Alkylen (ankondensierter 5- oder 6-gliedriger cycloaliphatischer Ring),

p für eine ganze Zahl von 0, 1 bis 5, vorzugsweise 0, 1 bis 3 stehen,

enthält,
und der Weichblock
99 - 50 Gew.-%, vorzugsweise 95 - 70 Gew.-% Wiederholungseinheiten basierend auf geradkettigem oder verzweigtem $C_2$-$C_{14}$-Alkylen, vorzugsweise $C_2$-$C_8$-Alkylen und
1 - 50 Gew.-%, vorzugsweise 5 - 30 Gew.-% Wiederholungseinheiten der allgemeinen Formel (I)
enthält.

Die Wiederholungseinheiten im Weichblock können statistisch, alternierend oder gradient verteilt sein.

Der Anteil der harten Blöcke (bezogen auf das Gesamtpolymer) beträgt im allgemeinen 65 bis 97 Gew.-%, vorzugsweise 75 bis 95 Gew.-% und der Anteil der weichen Blöcke 3 bis 35 Gew.-%, vorzugsweise 5 bis 25 Gew.-%.

Die Wiederholungseinheiten gemäß Formel (I) im Hart- und Weichblock können sowohl gleich als auch verschieden sein. Ein Hartblock und ein Weichblock können selbst wiederum verschiedene Wiederholungseinheiten gemäß Formel (I) enthalten.

Die Hartblöcke der erfindungsgemäßen Blockcopolymere können höchstens zu 35 Gew.-% weitere Wiederholungseinheiten enthalten, die auf gängigen, gegebenenfalls substituierten olefinischen Comonomeren, vorzugsweise durch $C_1$-$C_4$-Alkyl substituiertem Cyclohexadien, Norbornen, Dicyclopentadien, Dihydrocyclopentadien, Tetracyclododecen, Vinylester, Vinylether, Vinylacetat, Maleinsäurederivate und (Meth)acrylsäurederivate basieren.

Das erfindungsgemäße Blockcopolymer kann gegebenenfalls weitere Weichblöcke aus Wiederholungseinheiten basierend auf gesättigten, gegebenenfalls durch $C_1$-$C_4$-Alkyl substituierten, aliphatischen Kohlenwasserstoffketten mit 2 bis 10, vorzugsweise 2 bis 5 Kohlenstoffatomen und deren Isomerform, enthalten.

Das erfindungsgemäße Blockcopolymer hat im allgemeinen Molekulargewichte (Zahlenmittel) von 5000-1.000.000, vorzugsweise von 50.000-500.000, besonders bevorzugt 80.000-200.000 bestimmt nach Gelpermeationschromatographie, kalibriert mit Polystyrol-Standard. Das Molekulargewicht (Zahlenmittel) der Hartblöcke beträgt im allgemein 650-970.000, vorzugsweise von 6500-480.000, besonders bevorzugt 10.000-190.000. Das Molekulargewicht der Weichblöcke beträgt im allgemein 150-350.000, vorzugsweise von 1500-170.000, besonders bevorzugt 2400-70.000. Das Blockcopolymer kann jeweils Hart- bzw. Weichblöcke mit unterschiedlichen Molekulargewichten enthalten.

Die Verknüpfung der Kettenbausteine kann außer der stereoregulären Kopf-Schwanz Verknüpfung einen geringen Anteil Kopf-Kopf Verknüpfung aufweisen. Die Copolymere können linearförmig oder über Zentren verzweigt sein. Sie können auch eine sternförmige Struktur besitzen. Bevorzugt sind im Rahmen dieser Erfindung lineare Blockcopolymere.

Das erfindungsgemäße Blockcopolymer kann verschiedene Blockstrukturen aufweisen, wobei die Endblöcke unabhängig voneinander ein Hart- oder Weichblock sein können. Sie können beispielsweise folgendermaßen aufgebaut sein:

$$A^1 - (B^i - A^i)_n;$$

$$B^1 - (A^i - B^i)_n;$$

$$(A^i - B^i)_n;$$

wobei

A für einen Hartblock, B für einen Weichblock,
$n \geq 1$, vorzugsweise für 1, 2, 3, 4 und
i für eine ganze Zahl zwischen 1 und n ($1 \leq i \leq n$)

stehen.

Die Hart- und Weichblöcke in dem erfindungsgemäßen Blockcopolymer sind im allgemeinen miteinander unverträglich. Diese Unverträglichkeit führt zur Phasenseparation in mikroskopischem Ausmaß.

Wegen Mikrophasenseperation weist das erfindungsgemäße Blockcopolymer im allgemeinen mehr als einen Glasübergang auf. Die Glasübergangstemperatur der Hartphase, bestehend vorwiegend aus Hartblöcken beträgt mindestens 100°C, vorzugsweise mindestens 120°C, besonders bevorzugt mindestens 140°C, ermittelt durch Differentialthermoanalyse. Die Glasübergangstemperatur der Weichphase, bestehend vorwiegend aus Weichblöcken, beträgt

-120°C bis 60°C, vorzugsweise - 100°C bis 20°C, besonders bevorzugt -80°C bis 0°C, ermittelt durch Dynamische Mechanische Analyse (DMA).

Ein weiterer Gegenstand der Erfindung ist ein Verfahren zur Herstellung der erfindungsgemäßen Blockcopolymere, das dadurch gekennzeichnet ist, daß man in einem lebenden Polymerisationsverfahren vinylaromatische Monomere der allgemeinen Formel (II) für die harten Blöcke sowie konjugierte Diene der allgemeinen Formel (III) und vinylarmatischen Monomeren der allgemeinen Formel (II) für die weichen Blöcke

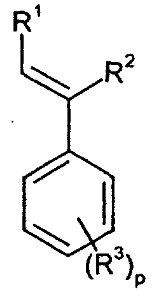

(II)

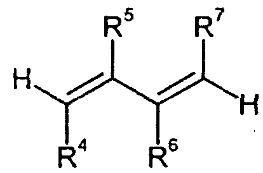

(III)

worin

$R^1$, $R^2$, $R^3$ und p die oben angegebene Bedeutung haben und

$R^4$ bis $R^7$ unabhängig voneinander Wasserstoff, $C_1$-$C_4$ Alkyl, vorzugsweise Methyl bedeuten,

zu einem Prepolymer umsetzt und anschließend die Kohlenstoff-Kohlenstoff-Doppelbindungen des Prepolymers in Gegenwart eines homogenen oder heterogenen Katalysators hydriert.

Die Monomeren gemäß Formel (II) können für den Hart- und Weichblock des Prepolymers sowohl gleich als auch verschieden sein. Ein Hartblock und ein Weichblock können verschiedene Wiederholungseinheiten auf Basis von Monomeren der Formel (II) enthalten.

Als Comonomere können bei der Polymerisation vorzugsweise verwendet und in die Hartblöcke miteingebaut werden: jeweils gegebenenfalls durch $C_1$-$C_4$-Alkyl substituiertes Cyclohexadien, Vinylcyclohexan, Vinylcyclohexen, Norbomen, Dicyclopentadien, Dihydrocyclopentadien, Tetracyclododecen, kern-alkylierte Styrole, α-Methylstyrol, Divinylbenzol, Vinylester, Vinylether, Vinylacetat, Maleinsäurederivate und (Meth)acrylsäurederivate, etc. oder eine Mischung daraus.

Gegenstand der Erfindung ist weiterhin ein Prepolymer mit mindestens drei Blöcken, das mindestens einen Hartblock und mindestens einen Weichblock enthält,
wobei der Hartblock mindestens 65, vorzugsweise 70, besonders bevorzugt 75, ganz besonders bevorzugt 80, insbesondere 84 Gew.-% Wiederholungseinheiten der allgemeinen Formel (IV),

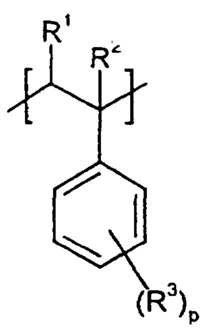

(IV)

worin
$R^1$, $R^2$, $R^3$ und p die oben angegebene Bedeutung haben,
und der Weichblock

99 - 50 Gew.-%, vorzugsweise 95 - 70 Gew.-% Wiederholungseinheiten basierendauf gegebenenfalls durch $C_1$-$C_4$-Alkenyl substituierten, geradkettigen oder verzweigten, aliphatischen, (gegebenenfalls olefinischen) Kohlenwasserstoffketten mit 2 bis 14, vorzugsweise 2 bis 5 Kohlenstoffatomen,

1-50 Gew.-%, vorzugsweise 5-30 Gew.-% Wiederholungseinheiten der allgemeinen Formel (IV)

enthält.

Die Wiederholungseinheiten im Weichblock können statistisch, alternierend oder gradient verteilt sein. Der Anteil der harten Blöcke beträgt im allgemeinen 65 bis 97 Gew.-%, vorzugsweise 75 bis 95 Gew.-% und der Anteil der weichen Blöcke 3 bis 35 Gew.-%, vorzugsweise 5 bis 25 Gew.-%.

Das Prepolymer kann durch ein lebendes Polymerisationsverfahren, wie z.B. eine lebende anionische Polymerisation oder eine lebende radikalische Polymerisation hergestellt werden. Solche Polymerisationsmethoden sind in der Polymerchemie allgemein bekannt. Besonders geeignet ist ein lebendes anionisches Polymerisationsverfahren, das durch Alkalimetalle oder durch Alkalimetallalkylverbindung wie Methyllithium und Butyllithium initiiert werden kann. Geeignete Lösungsmittel für derartige Polymerisation sind Kohlenwasserstoffe wie z.B. Cyclohexan, Hexan, Pentan, Benzol, Toluol, etc. und Ether wie z.B. Diethylether, Methyl-tert-butylether, Tetrahydrofuran.

Durch ein lebendes Polymerisationsverfahren sind verschiedene Blockstrukturen zugänglich. Bei anionischer Polymerisation in einem Kohlenwasserstoffmedium wie Cyclohexan oder Benzol erfolgen kein Kettenabbruch und kein Kettentransfer unter Ausschluß von aktiven Verunreinigungen wie Wasser, Sauerstoff, Kohlendioxid, etc. Durch sequentielle Additionen von Monomer oder Monomergemisch lassen sich Blockcopolymere mit bestimmten Blocksegmenten herstellen. So läßt sich beispielsweise ein Styrol-Isopren oder -Butadien-Diblockcopolymer herstellen, in dem man das Styrol-Monomer nach vollständiger Polymerisation von Dien zugibt. Die Kettenstruktur wird in der vorliegenden Erfindung durch das Symbol $(I)_m$-$(S)_n$ bzw. $(B)_m$-$(S)_n$ oder vereinfacht durch IS bzw. BS bezeichnet. m, n bedeuten Polymerisationsgrad in den jeweiligen Blöcken.

Außerdem ist es bekannt, daß man Blockcopolymere mit Mischblock ("verschmierte" Blockgrenze) herstellen kann, in dem man die günstigen Kreuzpolymerisationsparameter nutzt und die Polymerisation in einer Monomermischung startet. So läßt sich beispielsweise Styrol/Butadien-Diblockcopolymer mit einem dien-reichen Mischblock als Weichblock durch Initiierung in einer Mischung von Styrol und Butadien in einem Kohlenwasserstoffmedium herstellen. Die Polymerkette enthält einen dien-reichen Weichblock, eine Übergangsphase mit steigender Einbaurate an Styrol und einen Styrolblock, der die Kette beendet. Die Kettenstruktur wird durch das Symbol $(I^{I/S})_m$-$(S)_n$ bzw. $(B^{B/S})_m$-$(S)_n$ oder vereinfacht durch $I^{IS}S$ bzw. $B^{BS}S$ bezeichnet, wobei $I^{IS}$ und $B^{BS}$ jeweils für den Isopren-reichen und Butadien-reichen Weichblock stehen. Die entsprechenden hydrierten Produkte werden als H-$I^{IS}S$ bzw. H-$B^{BS}S$ bezeichnet.

Durch Kombination der obengenannten beiden Arbeitsweisen lassen sich Multiblockcopolymere mit sowohl gemischten als auch bestimmten Weichblöcken herstellen. Beispiele sind Triblock $SI^{IS}S$, $I^{IS}SI$ und Pentablock $S(I^{IS}S)_2$, $(I^{IS}S)_2I$. Die Symbole sind selbsterklärend. Die entsprechenden hydrierten Produkte werden als H-$SI^{IS}S$, H-$I^{IS}SI$ bzw. H-$S(I^{IS}S)_2$, H-$(I^{IS}S)_2I$ bezeichnet.

Eine Kontrolle des Molekulargewichts bei anionischer Polymerisation ist durch Variation von Monomer/Initiator-Verhältnis möglich. Das theoretische Molekulargewicht läßt sich durch folgende Gleichung berechnen:

$$M = \frac{\text{Gesamtgewicht der Monomere (g)}}{\text{Stoffmenge des Initiators (mol)}}$$

Andere Faktoren wie Lösungsmittel, Co-Lösungsmittel, Cokatalysator können ebenfalls die Kettenstruktur empfindlich beeinflußen. Kohlenwasserstoffe wie. z.B. Cyclohexan, Toluol oder Benzol sind in der vorliegenden Erfindung als Lösungsmittel für die Polymerisation bevorzugt, da in solchen Lösungsmitteln Blockcopolymer mit Mischblock gebildet werden kann und das Dien-Monomer bevorzugt zu dem hochelastischen 1,4-Polydien polymerisiert. Ein sauerstoff- oder stickstoff-haltiges Cosolvens wie z.B. Tetrahydrofuran, Dimethoxyethan oder N,N,N',N'-Tetramethyethylendiamin bewirkt eine statistische Polymerisation und gleichzeitig eine bevorzugte 1,2-Polymerisation von konjugierten Dienen. Im Gegensatz dazu bewirkt Alkalimetallalkoholat wie z.B. Lithium-tert-butylat zwar auch eine statistische Polymerisation, hat aber wenig Einfluß an das 1,2-/1,4-Verhältnis von Dienpolymerisation. Die Mikrostruktur der Weichblöcke in Prepolymer ist ausschlaggebend für die Mikrostruktur der Weichblöcke in dem entsprechenden hydrierten Blockcopolymer. So führt z.B. ein Poly-1,4-butadien-Block bei Hydrierung zu einem Polyethylen-Segment, das kristallisieren kann. Das Hydrierungsprodukt von Poly-1,2-butadien hat zu hohe Glastemperatur und ist somit nicht elastisch. Die Hydrierung von Polybutadienblock mit geeigneten 1,2/1,4-Verhältnissen kann ein elastisches Poly(ethylen-co-butylen) segment liefern. Bei Isopren als Comonomer für den Weichblock ist 1,4-Polymerisation bevorzugt, da ein alternierendes Poly(ethylen-propylen)-Elastomerblock nach Hydrierung resultiert. In der Regel verläuft die Dienpolymerisation nicht spezifisch und man findet alle möglichen isomeren Mikrostrukturen im Weichblock. Im Kohlenwasserstoffmedium ohne Co-Lösungsmittel polymerisiert Butadien und Isopren überwiegend zu 1,4-Mikrostruktur (ca. 90 %).

Temperatur, Druck und Monomerkonzentration sind für die Polymerisation weitgehend unkritisch. Bevorzugte Temperatur, Druck und Monomerkonzentration für die Polymerisation liegen im Bereich -60°C bis 130°C, besonders

bevorzugt 20°C bis 100°C, 0,8 bis 6 bar und 5 bis 30 Gew.-% (bezogen auf die Summe aus Monomerund Lösungsmittelmenge).

Das erfindungsgemäße Verfahren zur Herstellung der Blockcopolymere erfolgt wahlweise mit oder ohne, aber bevorzugt ohne Aufarbeitung zwischen Polymerisations- und Hydrierstufe zur Isolierung des Prepolymers. Eine eventuelle Aufarbeitung kann durch bekannte Verfahren wie Fällung in einem Nichtsolvens wie z:B. $C_1$-$C_4$-Alkohol und $C_3$-$C_6$-Keton, Ausdampfungsextrusion, oder Strippen, etc. erfolgen. Das Prepolymer wird in diesem Fall zur Hydrierung wieder in einem Lösungsmittel gelöst. Ohne Aufarbeitung kann die Prepolymerlösung direkt - gegebenenfalls nach Kettenabbruch und gegebenenfalls mit dem gleichen inerten Lösungsmittel wie in der Polymerisation oder mit einem anderen inerten Lösungsmittel verdünnt - hydriert werden. In diesem Fall ist ein gesättigter Kohlenwasserstoff wie z. B. Cyclohexan, Hexan oder Gemische davon als Lösungsmittel für das Verfahren besonders bevorzugt.

Die Hydrierung der Prepolymere wird nach allgemein bekannten Methoden durchgeführt (z.B. WO 94/02 720, WO 96/34 895, EP-A-322 731). Als Katalysatoren können eine Vielzahl von bekannten Hydrierkatalysatoren eingesetzt werden. Bevorzugte Metallkatalysatoren sind beispielsweise in WO 94/21 694 oder WO 96/34 896 genannt. Als Katalysator kann jeder für Hydrierreaktion bekannter Katalysator eingesetzt werden. Geeignet sind Katalysatoren mit großer Oberfläche (z.B. 100 - 600 $m^2$/g) und kleinem mittleren Porendurchmesser (z.B. 20 - 500 Å). Weiterhin sind auch Katalysatoren mit kleiner Oberfläche (z.B. > 10 $m^2$/g) und großen mittleren Porendurchmessern geeignet, die dadurch charakterisiert sind, das 98 % des Porenvolumens, Poren mit Porendurchmessern größer 600 Å aufweisen (z.B. ca. 1 000 - 4 000 Å) (vgl. z. B. US-A 5.654.253, US-A 5.612.422, JP-A 03076706). Insbesondere werden Raney-Nickel, Nickel auf Siliciumdioxid oder Siliciumdioxid/Aluminiumoxid, Nickel auf Kohlenstoff als Träger und/oder Edelmetallkatalysatoren, z. B. Pt, Ru, Rh, Pd, verwendet.

Die Hydrierung wird im allgemeinen bei Temperaturen zwischen 0 und 500°C, vorzugsweise zwischen 20 und 250°C, insbesondere zwischen 60 und 200°C, durchgerührt.

Die für Hydrierreaktionen üblichen verwendbaren Lösungsmitteln sind beispielsweise in DE-AS 1 131 885 beschrieben.

Die Reaktion wird im allgemeinen bei Drücken von 1 bar bis 1000 bar, vorzugsweise 20 bis 300 bar, insbesondere 40 bis 200 bar, durchgeführt.

Das Verfahren führt im allgemeinen zu einer praktisch vollständigen Hydrierung der aromatischen Einheiten und gegebenenfalls von in der Hauptkette befindlichen Doppelbindungen. In der Regel ist der Hydriergrad höher 97 %, besonders bevorzugt höher als 99,5%. Der Hydriergrad läßt sich beispielsweise durch NMR oder UV-Spektroskopie bestimmen.

Die eingesetzte Menge des Katalysators hängt von der Verfahrensweise ab. Das Verfahren kann kontinuierlich, halb-kontinuierlich oder diskontinuierlich durchgeführt werden.

Das Verhältnis Katalysator zu Prepolymer beträgt beispielsweise im diskontinuierlichen Prozeß im allgemeinen 0,3 - 0,001, bevorzugt 0,2 - 0,005, besonders bevorzugt 0,15 - 0,01.

Die erfindungsgemäßen Blockcopolymere weisen bei Raumtemperatur eine amorphe, mikrophasenseparierte Morphologie auf und zeichnen sich durch hohe Transparenz, hohe Zähigkeit, geringe Doppelbrechung und hohe Wärmeformbeständigkeit aus. Aufgrund ihrer guten Fließfähigkeit als Schmelze lassen sich sich durch Extrusion oder Spritzguß zu Platten oder beliebigen Formkörper thermoplastisch verarbeiten und auch zu Folien gießen.

Die erfindungsgemäßen Polymere sind aufgrund ihrer hervorragenden optischen Eigenschaften besonders geeignet zur Herstellung von optischen Materialien, z.B. für Linsen, Prismen, Spiegel, Farbfilter etc. Ferner als Medien für holographische Abbildungen (z.B. Scheck- Kredit-Karten, Ausweise, dreidimensionale holographische Bilder). Die Materialien können als transparente Medien zum Einschreiben dreidimensionaler Strukturen z.B. aus fokusierter kohärenter Strahlung (LASER) insbesondere als dreidimensionale Datenspeicher oder zur dreidimensionalen Abbildung von Gegenständen eingesetzt werden.

Das Material kann üblicherweise anstelle oder in Verbindung mit Glas bis Gebrauchstemperaturen von 140°C eingesetzt werden. Außenanwendungen für die transparenten Materialien sind Überdachungen, Fensterscheiben, Folien, Verglasung von Gewächshäuser z.B. in Form von Doppelstegplatten. Weitere Anwendungen sind Abdeckungen zum Schutz mechanisch empfindlicher Systeme bei gleichzeitig hoher Transparenz z.B. im Bereich der Photovoltaik insbesondere Solarzellen oder Sonnenkollektoren. Die erfindungsgemäßen Kunststoffe können mit anderen Materialien beschichtet werden, insbesondere mit Nanopartikeln zur Erhöhung der Kratzfestigkeit, Metallen und anderen Polymeren.

Anwendungen für den Haushalt sind zum Beispiel transparente Verpackungsmaterialien mit geringer Wasserdurchlässigkeit, extrusions- oder spritzgußhergestellte Haushaltsgegenstände z.B. Becher und Behälter. Ferner Haushaltsgerätegehäuse sowie transparente Lampenabdeckungen.

Die Kunststoffe können als temperaturbeständige Hartschäume zur Isolation im Bauund Technikbereich (Haus- und Geräteisolation z.B. für Kühlschränke) eingesetzt werden und zum Beispiel Polystyrol- und Polyurethan-Schaum ersetzen. Ein Vorteil ist die hohe Dauergebrauchstemperatur.

Aufgrund der geringen Dichte (d < 1) und der daraus resultierenden Gewichtsersparnis sind die Materialien

besonders geeignet für Anwendungen in der Automobil-, Luft- und Raumfahrtindustrie für Instrumententafeln, transparente Abdeckungen von Instrumentensystemen sowie von Lichtquellen, Bordverglasung, und Isolationsmaterial.

Die Materialien sind Isolatoren für elektrischen Strom und eignen sich daher für die Herstellung von Kondensatoren (z.B. Dielektrika), elektronische Schaltkreise und Gerätegehäuse. Weitere Anwendungen in der Elektronikindustrie bestehen insbesondere aufgrund der Kombination von hoher optischer Transparenz bei hoher Wärmeformbeständigkeit, geringer Wasseraufnahme in Verbindung mit Licht aus geeigneten emittierenden Quellen. Die Materialien eignen sich daher für die Herstellung von Leuchtdioden, Laserdioden, Matrizes für organische, anorganische und polymere elektrolumineszierende Materialien, optoelektronische Signalaufnahmegeräte, Datenübertragungsysteme durch Glasfaserersatz (z.B. polymere Lichtwellenleiter), transparente Materialien für elektronische Anzeigemedien (Bildschirme, Displays, Projektionsapparate) z.B. von flüssigkristallinen Substraten.

Die Materialien eignen sich für Anwendungen in der Medizintechnik für transparente Extrusions- oder Spritzgußartikel für sterile und unsterile Analysengefäße, Petrischalen, Mikrofilterplatten, Objektträger, Schläuche, Beatmungstubi, Kontaktlinsen und Behälter von z.B. Infusionslösungen oder Medikamentenlösungen. Extrusionsund Spritzgußartikel für Anwendungen im Blutkontakt insbesondere zur Herstellung von Spritzen, Kanülen, Katheter, Kurz- und Langzeitimplantaten (z.B. künstliche Linsen), Blutschläuchen, Membranen zur Blutwäsche, Dialysatoren, Oxygenatoren, transparenten Wundabdeckungen, Blutkonserven und Nahtmaterialien.

Die erfindungsgemäßen Blockcopolymere eignen sich insbesondere als Substratmaterial für optische Datenspeicher wie Compact Discs, Video discs, wiederbeschreibbare optische Discs, magneto-optische Discs.

Als optische Datenspeicher werden beispielhaft genannt:

- Magneto-optische Disc (MO-Disc)
- Mini-Disc (MD)
- ASMO (MO-7) ("Advanced storage magnetooptic")
- DVR (12 Gbyte Disc)
- MAMMOS ("Magnetic Amplifying magneto optical system")
- SIL ans MSR ("Solid immersion lens" and "magnetic superresolution")
- CD-ROM (Read only memory)
- CD, CD-R (recordable), CD-RW (rewritable), CD-I (interactive), Photo-CD
- Super Audio CD
- DVD, DVD-R (recordable), DVD-RAM (random access memory);
- DVD = Digital versatile disc
- DVD-RW (rewritable)
- PC + RW (Phase change and rewritable)
- MMVF (multimedia video file system)

Als Substrat für optische Datenspeicher können transparente Kunststoffe wie aromatisches Polycarbonat, Polymethylmethacrylat oder Polystyrol, verwendet werden. Für sehr hohe Dichten der Datenspeicherung (>10 Gbyte pro Pit-Layer von 120 mm Durchmesser) ist jedoch keines der gängigen Substratmaterialien uneingeschränkt verwendbar. Dazu sind sehr niedrige Doppelbrechung und Wasseraufnahme, hohe Wärmeformbeständigkeit und Fließfähigkeit, ausreichende mechanischen Eigenschaften gleichzeitig erforderlich. Aromatische Polycarbonate besitzen zwar sehr gute mechanische Eigenschaften und Wärmeformbeständigkeit, aber zu hohe Doppelbrechung und Wasseraufnahme. Polystyrol weist zu hohe Doppelbrechung und zu niedrige Wärmeformbeständigkeit auf. Polymethylmethacrylat hat zu hohe Wasseraufnahme und zu geringe Formbeständigkeit.

Doppelbrechung in Spritzgußkörpem, eine der wichtigsten optischen Eigenschaften, läßt sich auf molekularem Niveau durch die rheooptische Konstante beschrieben. Die rheooptische Konstante kann sowohl positiv oder negativ sein. Je größer der absolute Wert der rheooptischen Konstante ist, um so größer ist die Doppelbrechung in spritzgegossenen Formteilen. Die an dem erfindungsgemäßen Material bestimmte rheooptische Konstante $C_R$ liegt, abhängig von der Kettenstruktur und Zusammensetzung, zwischen $-0.3GPa^{-1}$ und $0.3GPa^{-1}$. Der Betrag ist mehr als eine Zehnerpotenz kleiner als der für Polycarbonat (+ 5.4 $GPa^{-1}$). Das Meßverfahren der rheooptischen Konstante ist in EP-A 0621 297 beschrieben. Die dazu benötigten planparallelen 150 bis 1000 µm-Probekörper können durch Schmelzpressen oder Filmgießen hergestellt werden. Das Material kann im Vergleich zu Polycarbonat als doppelbrechungsfrei angesehen werden. Es besitzt eine hohe Wärmeformbeständigkeit, eine sehr niedrige Wasseraufnahme, und gute mechanischen Eigenschaften und ist daher ein ideales Material für sehr hohe Dichten der optischen Datenspeicherung (> 10 Gbyte auf einer Scheibe von 120 mm Durchmesser).

Zur Verbesserung der Material- und Verarbeitungseigenschaften können den erfindungsgemäßen Blockcopolymeren verschiedene Additive (wie z.B. Antioxidant, Entformungsmittel) oder Farbmittel beigemischt werden. Sie können auch als Blendpartner oder Kompatibilitätsvermittler in einem Blendsystem verwendet werden. Geeignete Blendpartner sind beispieweise Polyvinylcyclohexan, Polycycloolefine aus Norbomen- oder Tetracyclododecen-Basis,

Polystyrol, Polycarbonat, Polyester, Polyacrylate, Polyvinylacetat, Polyethylen, Polypropylen und verschiedene Elastomere.

Die erfindungsgemäßen Blockcopolymere können auch als Mischung miteinander eingesetzt werden.

## Beispiele

### Beispiel 1

In einem thermostatisierten 2 l-Glasautoklaven, ausgerüstet mit Rührer, Thermofühler und Stickstoff-Überlagerung, werden unter Ausschluß von Luft und Wasser 1040 g trockenes Cyclohexan und 76.5 g trockenes Styrol vorgelegt. Der Inhalt des Autoklaven wird durch mehrmaliges Bedrücken mit Stickstoff inertisiert. Nach Erwärmung auf 50°C wird 0.9 ml (1.44 mmol) n-Butyllithium (1.6 M Lösung in Hexan) eingespritzt. Man erhöht die Innentemperatur auf 70°C und rührt 1 h nach.

Dann gibt man eine Mischung aus 27 g trockenem Isopren und 76.5 g trockenem Styrol zu und rührt 3 h nach. Nach Abkühlung auf Raumtemperatur wird die viskose Lösung in ein anderes mit Stickstoff inertisiertes Gefäß überführt und die Polymerisation mit wenig Isopropanol gestoppt. Der Umsatz gemäß Festgehaltbestimmung ist quantitativ. Die Strukturdaten sind in der Tabelle 1 aufgelistet.

### Beispiel 2

Es wird wie im Beispiel 1 vorgegangen, wobei jedoch 81 g Styrol, 18 g Isopren und 81 g Styrol in den entsprechenden Arbeitsstufen eingesetzt werden. Der Umsatz gemäß Festgehaltbestimmung ist quantitativ. Die Strukturdaten sind in der Tabelle 1 aufgelistet.

### Beispiel 3

Es wird wie im Beispiel 1 vorgegangen, wobei jedoch 85.5 g Styrol, 9 g Isopren und 85.5 g Styrol in den entsprechenden Arbeitsstufen eingesetzt werden. Der Umsatz gemäß Festgehaltbestimmung ist quantitativ. Die Strukturdaten sind in der Tabelle 1 aufgelistet.

Tabelle 1:

| Triblock-Prepolymere mit harten Endgruppen | | | | |
|---|---|---|---|---|
| Beispiel | Strukturbezeichnung | Styrolgehalt | Isoprengehalt | Umsatz |
| 1 | $SI^{IS}S$ | 85 Gew.% | 15 Gew.% | > 98% |
| 2 | $SI^{IS}S$ | 90 Gew.% | 10 Gew.% | > 98% |
| 3 | $SI^{IS}S$ | 95 Gew.% | 5 Gew.% | > 98% |

### Beispiel 4

In einem thermostatisierten 2 l-Glasautoklaven, ausgerüstet mit Rührer, Thermofühler und Stickstoff-Überlagerung, werden unter Ausschluß von Luft und Wasser 1040 g trockenes Cyclohexan, 9 g trockenes Isopren und 162 g trockenes Styrol vorgelegt. Der Inhalt des Autoklaven wird durch mehrmaliges Bedrücken mit Stickstoff inertisiert. Nach Erwärmung auf 50°C wird 0.9 ml (1.44 mmol) n-Butyllithium (1.6 M Lösung in Hexan) eingespritzt. Man erhöht die Innentemperatur auf 70°C und rührt 1h nach.

Dann gibt man 9 g trockenes Isopren zu und rührt 3 h weiter. Nach Abkühlung auf Raumtemperatur wird die viskose Lösung in einen anderen mit Stickstoff inertisierten Gefäß überführt und die Polymerisation mit wenig Isopropanol gestoppt. Der Umsatz gemäß Festgehaltbestimmung ist quantitativ. Die Strukturdaten sind in der Tabelle 2 aufgelistet.

### Beispiel 5

In einem thermostatisierten 2 l-Glasautoklaven, ausgerüstet mit Rührer, Thermofühler und Stickstoff-Überlagerung, werden unter Ausschluß von Luft und Wasser 1040 g trockenes Cyclohexan und 54 g trockenes Styrol vorgelegt. Der Inhalt des Autoklaven wird durch mehrmaliges Bedrücken mit Stickstoff inertisiert. Nach Erwärmung auf 50°C wird 0.9 ml (1.44 mmol) n-Butyllithium (1.6 M Lösung in Hexan) eingespritzt. Man erhöht die Innentemperatur

auf 70°C und rührt 1 h nach.

Dann gibt man eine Mischung aus 9 g trockenem Isopren und 54 g trockenem Styrol zu und rührt 1 Stdn. weiter.

Zum Schluß gibt man wieder eine Mischung aus 9 g trockenem Isopren und 54 g trockenem Styrol zu und rührt nochmals 3 h weiter. Nach Abkühlung auf Raumtemperatur wird die viskose Lösung in einen anderen mit Stickstoff inertisierten Gefäß überführt und die Polymerisation mit wenig Isopropanol gestoppt. Der Umsatz gemäß Festgehaltbestimmung ist quantitativ. Die Strukturdaten sind in der Tabelle 2 aufgelistet.

**Beispiel 6**

In einem thermostatisierten 2 l-Glasautoklaven, ausgerüstet mit Rührer, Thermofühler und Stickstoff-Überlagerung, werden unter Ausschluß von Luft und Wasser 1040 g trockenes Cyclohexan und 9 g trockenes Isopren und 76.5 g trockenes Styrol vorgelegt. Der Inhalt des Autoklaven wird durch mehrmaliges Bedrücken mit Stickstoff inertisiert. Nach Erwärmung auf 50°C wird 0.9 ml (1.44 mmol) n-Butyllithium (1.6 M Lösung in Hexan) eingespritzt. Man erhöht die Innentemperatur auf 70°C und rührt 1 h nach.

Dann gibt man eine Mischung aus 9 g trockenem Isopren und 76.5 g trockenem Styrol zu und rührt 1 h weiter.

Zum Schluß gibt man 9 g Isopren und rührt nochmals 3 h. Nach Abkühlung auf Raumtemperatur wird die viskose Lösung in einen anderen mit Stickstoff inertisierten Gefäß überfuhrt und die Polymerisation mit wenig Isopropanol gestoppt. Der Umsatz gemäß Festgehaltbestimmung ist quantitativ. Die Strukturdaten sind in der Tabelle 2 aufgelistet.

Tabelle 2:

| Pentablock-Prepolymere mit harten oder weichen Endgruppen | | | | |
|---|---|---|---|---|
| Beispiel | Strukturbezeichnung | Styrolgehalt | Isoprengehalt | Umsatz |
| 4 | $I^{IS}SI$ | 90 Gew.% | 10 Gew.% | > 98% |
| 5 | $S(I^{IS}S)_2$ | 90 Gew.% | 10 Gew.% | > 98% |
| 6 | $(I^{IS}S)_2I$ | 85 Gew.% | 15 Gew.% | > 98% |

**Beispiel 7**

Ein 5 l-Stahlautoklav wird mit Stickstoff gespült. Die Polymerlösung aus Beispiel 1 und 22.5 g Nickel auf Kieselgel/Aluminiumoxid (Ni/Al2O3.SiO2, Ni 64-67%, reduziert) werden zugegeben. Nach dem Verschließen wird mehrmals mit Stickstoff, dann mit Wasserstoff beaufschlagt. Nach dem Entspannen wird der Wasserstoffdruck auf 140 bar eingestellt und unter Rühren 6 h auf 175°C geheizt.

Nach beendeter Reaktion wird die Polymerlösung filtriert. Das Produkt wird in Aceton gefällt und bei 120°C getrocknet. Die Ausbeute beträgt 94 %. Weder aromatische noch olefinische Kohlenstoff-Kohlenstoff Doppelbindung sind anhand 1H-NMR-Spektroskopie nachweisbar.

Teststäbe für Zugexperimente werden an einer Arburg-Spritzgußmaschine (ARB. 270-200-18mm) bei der Schmelzetemperatur von 230°C und der Werkzeugtemperatur von 40°C hergestellt. Das Produkt zeigt die in der Tabelle 3 aufgeführten physikalischen Eigenschaften.

**Beispiel 8 - Beispiel 12**

Es wird wie im Beispiel 7 vorgegangen, wobei die Polymerlösung jeweils aus dem Beispiel 2 bis Beispiel 6 eingesetzt wird. Weder aromatische noch olefinische Kohlenstoff-Kohlenstoff-Doppelbindung sind an den Hydrierprodukten anhand $^1$H-NMR-Spektroskopie nachweisbar. Die Versuchsdaten werden in der Tabelle 3 zusammengefaßt.

**Vergleichsbeispiel 1**

In einem thermostatisierten 2 l-Glasautoklaven, ausgerüstet mit Rührer, Thermofühler und Stickstoff-Überlagerung, werden unter Ausschluß von Luft und Wasser 1040 g trockenes Cyclohexan, 45 g trockenes Isopren und 135 g trockenes Styrol vorgelegt. Der Inhalt des Autoklaven wird durch mehrmaliges Bedrücken mit Stickstoff inertisiert. Nach Erwärmung auf 50°C wird 0.9 ml (1.44 mmol) n-Butyllithium (1.6 M Lösung in Hexan) eingespritzt. Man erhöht die Innentemperatur auf 70°C und rührt 3 h nach. Nach Abkühlung auf Raumtemperatur wird die viskose Lösung in einen anderen mit Stickstoff inertisierten Gefäß überführt und die Polymerisation mit wenig Isopropanol gestoppt. Der Umsatz gemäß Festgehaltbestimmung ist quantitativ.

Die resultierte Polymerlösung wird in Analogie zu dem im Beispiel 7 beschriebenen Verfahren vollständig hydriert. Das Hydrierungsprodukt wird analog aufgearbeitet und zu Teststäben verspritzt. Die Versuchsdaten werden in der Tabelle 4 zusammengefaßt.

## Vergleichsbeispiel 2

Es wird wie in Vergleichsbeispiel 1 vorgegangen, wobei 27 g Isopren und 153 g Styrol in den entsprechenden Arbeitsstufen eingesetzt werden. Die Versuchsdaten werden in der Tabelle 4 zusammengefaßt.

## Vergleichsbeispiel 3

In einem thermostatisierten 2 l-Glasautoklaven, ausgerüstet mit Rührer, Thermofühler und Stickstoff-Überlagerung, werden unter Ausschluß von Luft und Wasser 1040 g trockenes Cyclohexan und 67.5 g trockenes Styrol vorgelegt. Der Inhalt des Autoklaven wird durch mehrmaliges Bedrücken mit Stickstoff inertisiert. Nach Erwärmung auf 50°C wird 1.6 ml (2.56 mmol) n-Butyllithium (1.6 M Lösung in Hexan) eingespritzt. Man erhöht die Innentemperatur auf 70°C und rührt 1 h nach. Dann gibt man 45 g trockenes Butadien zu und rührt 1 h weiter. Zum Schluß gibt man 67.5 g trockenes Styrol zu und rührt 3 h nach. Nach Abkühlung auf Raumtemperatur wird die viskose Lösung in einen anderen mit Stickstoff inertisierten Gefäß überführt und die Polymerisation mit wenig Isopropanol gestoppt. Der Umsatz gemäß Festgehaltbestimmung ist quantitativ.

Die resultierte Polymerlösung wird in Analogie zu dem in Beispiel 7 beschriebenen Verfahren vollständig hydriert. Das Produkt wird in Aceton gefällt und bei 120°C getrocknet. Weder aromatische noch olefinische Kohlenstoff-Kohlenstoff-Doppelbindung sind anhand 1H-NMR-Spektroskopie nachweisbar. Das Produkt zeigt die in der Tabelle 4 aufgeführten physikalischen Eigenschaften.

## Vergleichsbeispiel 4

Teststäbe für Zugexperimente aus Polystyrol PS158K (BASF AG, Ludwigshafen, Deutschland) werden an einer Arburg-Spritzgußmaschine (ARB. 270-200-18mm) bei der Schmelzetemperatur von 230°C und der Werkzeugtemperatur von 40°C hergestellt. Das Produkt zeigt die in der Tabelle 4 aufgeführten physikalischen Eigenschaften.

**Tabelle 3:** Beispiele 7 - 12

| Beipiel | Struktursymbol | Ausbeute | Tg (DSC, °C) | Tg (DMA, °C) 1) | G'(GPa) 2) | Zugfestigkeit (MPa) 6) | $\varepsilon_b$ (RT) 3) | $C_R$ ($GPa^{-1}$) 4) | Trübung 5) |
|---|---|---|---|---|---|---|---|---|---|
| 7 | $H-SI^{IS}S$ (85%S) | 94% | 143.4 | -36 / 132 | 0.78 | 42.3 | 6.7 % | <0.05 | 4.9 % |
| 8 | $H-SI^{IS}S$ (90%S) | 97% | 141.0 | -7 / 124 | 1.005 | 49.5 | 4.4 % | <0.05 | 3.9 % |
| 9 | $H-SI^{IS}S$ (95%S) | >98% | 131.6 | - / 125 | 1.225 | 45.4 | 3.23 % | -0.13 | 8.3% |
| 10 | $H-I^{IS}SI$ (90%S) | >98% | 146.4 | 23 / 132 | 1.025 | 50.3 | 4.1 % | <0.05 | 8.6 % |
| 11 | $H-S(I^{IS}S)_2$ (90%S) | 87% | 124.0 | - / 105 | 0.995 | 46.5 | 3.5 % | -0.18 | 3.8 % |
| 12 | $H-(I^{IS}S)_2I$ (85%S) | >98% | 129.9 | - / 105 | 0.93 | 47.0 | 5.0 % | 0.12 | 1.6–3.2% |

1) Die beiden $T_g$-Werte (DMA) entsprechen den Glasübergängen der dispergierten Weichphase und der kontinuierlichen Hartphase.

2) Speichermodul bei Raumtemperatur (DMA)

3) Bruchdehnung bei Raumtemperatur (Zugversuch an 3 mm Schulterstäben bei Raumtemperatur, gemessen in Anlehnung an DIN 53 455 bei einer Querhauptgeschwindigkeit von 5 mm/min)

4) Rheooptische Konstante (gemessen gemäß den Angaben in EP-A 621 297)

5) gemessen nach ASTM D 1003 an 3 mm Schulterstab

6) gemessen in Anlehnung an DIN 53 455 bei einer Querhauptgeschwindigkeit von 5 mm/min

**Tabelle 4:** Vergleichsbeispiele 1 - 4

| Vergleichs-beispiel | Struktursymbol | Aus-beute | Tg (DSC, °C) | Tg (DMA, °C) 1) | G'(GPa) 2) | Zugfestig-keit (MPa) 6) | $\varepsilon_b$ (RT) 3) | $C_R$ ($GPa^{-1}$) 4) | Trübung 5) |
|---|---|---|---|---|---|---|---|---|---|
| 1 | $H\text{-}I^{IS}S$ (75%S) | >98% | 137.6 | -22 / 135 | 0.33 | 31 | 13% | - 0.08 | 29% |
| 2 | $H\text{-}I^{IS}S$ (85%S) | 96% | 138.9 | -10 / 135 | 0.71 | 36 | 3% | -0.05~ 0.05 | 11% |
| 3 | H-SBS (75%S) | 80% | (teilkristallin $T_m$ ~ 86°C) | - | - | - | - | - | (trüb) |
| 4 | Polystyrol 7) | - | 100 | 106 | 1.425 | 52,5 | 2,1 % | -4.5 | 4% |

1) Die beiden $T_g$-Werte (DMA) entsprechen den Glasübergängen der dispergierten Weichphase und der kontinuierlichen Hartphase.

2) Speichermodul bei Raumtemperatur (DMA)

3) Bruchdehnung bei Raumtemperatur (Zugversuch an 3 mm Schulterstäben bei Raumtemperatur, gemessen in Anlehnung an DIN 53 455 bei einer Querhauptgeschwindigkeit von 5 mm/min)

3) Rheooptische Konstante (gemessen gemäß den Angaben in EP-A 621 297)

4) gemessen nach ASTM D 1003 an 3 mm Schulterstab

5) gemessen in Anlehnung an DIN 53 455 bei einer Querhauptgeschwindigkeit von 5 mm/min

6) Polystyrol: Polystyrol 158 K, BASF AG, Ludwigshafen, Deutschland

## Patentansprüche

**1.** Blockcopolymer mit mindestens drei Blöcken, das mindestens einen Hartblock und mindestens einen Weichblock enthält, wobei der Hartblock mindestens 65 Gew.-% Wiederholungseinheiten der allgemeinen Formel (I)

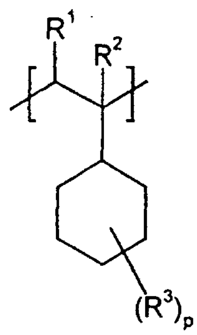

(I)

worin

$R^1$ und $R^2$ unabhängig voneinander Wasserstoff oder $C_1$-$C_6$-Alkyl bedeuten,

$R^3$ für Wasserstoff oder für $C_1$-$C_6$-Alkyl oder für anneliertes Alkylen,

p für eine ganze Zahl von 0,1 bis 5 stehen,

enthält,
und der Weichblock
99 - 50 Gew.-% Wiederholungseinheiten basierend auf geradkettigem oder verzweigtem $C_2$-$C_{14}$-Alkylen und
1 - 50 Gew.-% Wiederholungseinheiten der allgemeinen Formel (I)
enthält.

**2.** Blockcopolymer gemäß Anspruch 1, wobei der Hartblock mindestens 70 Gew.-% Wiederholungseinheiten der Formel (I) enthält.

**3.** Blockcopolymer gemäß Anspruch 1, wobei der Hartblock mindestens 75 Gew.-% Wiederholungseinheiten der Formel (I) enthält.

**4.** Blockcopolymer gemäß Anspruch 1, wobei der Hartblock mindestens 80 Gew.-% Wiederholungseinheiten der Formel (I) enthält.

**5.** Blockcopolymer gemäß Anspruch 1, wobei der Hartblock mindestens 84 Gew.-% Wiederholungseinheiten der Formel (I) enthält.

**6.** Blockcopolymer, gemäß der vorhergehenden Ansprüche, wobei der Weichblock 95 bis 70 Gew.-% Wiederholungseinheiten basierend auf geradkettigem oder verzweigtem $C_2$-$C_{14}$-Alkylen und 5 bis 30 Gew.-% Wiederholungseinheiten der allgemeinen Formel (I) enthält.

**7.** Blockcopolymer gemäß der vorhergehenden Ansprüche, wobei der Anteil der Hartblöcke, bezogen auf das Gesamtpolymer, 65 bis 97 Gew.-% und der Anteil der Weichblöcke 3 bis 35 Gew.-% beträgt.

**8.** Blockopolymer gemäß der vorhergehenden Ansprüche mit folgender Blockstruktur

$$A^1\text{-}(B^i\text{-}A^i)_n;$$

$$B^1\text{-}(A^i\text{-}B^i)_n;$$

$(A^i\text{-}B^i)_n$;

wobei

A für einen Hartblock, B für einen Weichblock,
n ≥ 1, vorzugsweise für 1, 2, 3, 4 und
i für eine ganze Zahl zwischen 1 und n (1 ≤ i ≤ n).

**9.** Verfahren zur Herstellung der Blockcopolymeren gemäß der vorhergehenden Ansprüche, wobei man in einem lebenden Polymerisationsverfahren vinylaromatische Monomere der allgemeinen Formel (II) für die harten Blöcke sowie konjugierte Diene der allgemeinen Formel (III) und vinylarmatischen Monomeren der allgemeinen Formel (II) für die weichen Blöcke

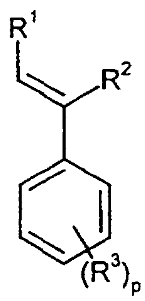

(II)

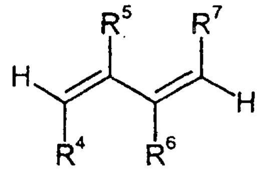

(III)

worin
$R^1$, $R^2$, $R^3$ und p die oben angegebene Bedeutung haben und
$R^4$ bis $R^7$ unabhängig voneinander Wasserstoff, $C_1$-$C_4$ Alkyl bedeuten,
zu einem Prepolymer umsetzt und anschließend die Kohlenstoff-Kohlenstoff-Doppelbindungen des Prepolymers in Gegenwart eines homogenen oder heterogenen Katalysators hydriert.

**10.** Prepolymer mit mindestens drei Blöcken, das mindestens einen Hartblock und mindestens einen Weichblock-enthält,
wobei der Hartblock mindestens 65 Gew.-% Wiederholungseinheiten der allgemeinen Formel (IV),

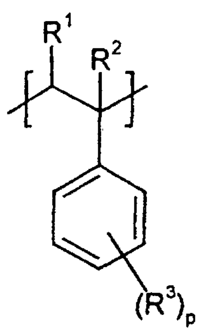

(IV)

worin
$R^1$, $R^2$, $R^3$ und p die oben angegebene Bedeutung haben,
und der Weichblock
99 - 50 Gew.-% Wiederholungseinheiten basierend auf gegebenenfalls durch $C_1$-$C_4$-Alkenyl substituierten, geradkettigen oder verzweigten, aliphatischen, (gegebenenfalls olefinischen) Kohlenwasserstoffketten mit 2 bis 14,
1 - 50 Gew.-% Wiederholungseinheiten der allgemeinen Formel (IV)
enthält.

**11.** Verwendung der Prepolymeren gemäß Anspruch 11 zur Herstellung von Blockcopolymeren gemäß Anspruch 1.

**12.** Verwendung der Blockcopolymeren gemäß der Ansprüche 1 bis 10 zur Herstellung von Formkörpern.

**13.** Formkörper, erhältlich aus Blockcopolymeren gemäß der Ansprüche 1 bis 10.

**14.** Optische Datenspeicher, erhältlich aus Blockcopolymeren gemäß der Ansprüche 1 bis 10.

## Claims

**1.** A block copolymer which comprises at least three blocks and which contains at least one hard block and at least one soft block, wherein the hard block contains at least 65 % by weight of recurring units of general formula (I)

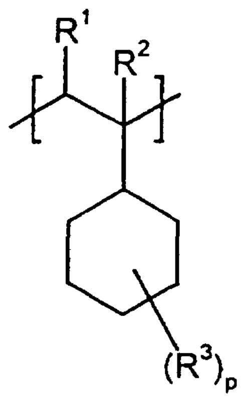

(I)

wherein

$R^1$ and $R^2$, independently of each other, denote hydrogen or a $C_1$-$C_6$ alkyl,

$R^3$ represents hydrogen or a $C_1$-$C_6$ alkyl or an alkylene comprising a condensed-on ring,

p represents an integer of 0 or 1 to 5,

and the soft block contains
99 - 50 % by weight of recurring units based on a straight chain or branched $C_2$-$C_{14}$ alkylene, and
1- 50 % by weight of recurring units of general formula (I).

**2.** A block copolymer according to claim 1, wherein the hard block contains at least 70 % by weight of recurring units of formula (I).

**3.** A block copolymer according to claim 1, wherein the hard block contains at least 75 % by weight of recurring units of formula (I).

**4.** A block copolymer according to claim 1, wherein the hard block contains at least 80 % by weight of recurring units of formula (I).

**5.** A block copolymer according to claim 1, wherein the hard block contains at least 84 % by weight of recurring units of formula (I).

**6.** A block copolymer according to the preceding claims, wherein the soft block contains 95 to 70 % by weight of recurring units based on a straight chain or branched $C_2$-$C_{14}$ alkylene and 5 to 30 % by weight of recurring units of general formula (I).

**7.** A block copolymer according to the preceding claims, wherein the proportion of hard blocks, with respect to the total polymer, is 65 to 97 % by weight and the proportion of soft blocks is 3 to 35 % by weight.

**8.** A block copolymer according to the preceding claims, having the following block structure

$$A^1\text{-} (B^i \text{-}A^i)_n;$$

$$B^1\text{-} (A^i \text{-}B^i)_n;$$

$$(A^i\text{-}B^i)_n;$$

wherein

A represents a hard block, B represents a soft block.,
$n \geq 1$, and preferably represents 1, 2, 3 or 4, and
i represents an integer between 1 and n ($1 \leq i \leq n$).

**9.** A process for producing block copolymers according to the preceding claims, wherein aromatic vinyl monomers of general formula (II) for the hard blocks, conjugated dienes of general formula (III), and aromatic vinyl monomers of general formula (II) for the soft blocks

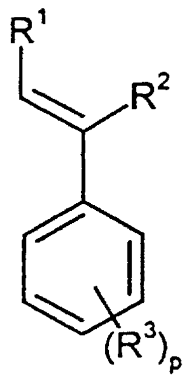

(II)

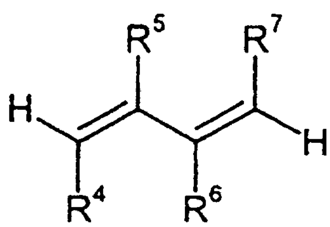

(III)

wherein
$R^1$, $R^2$, $R^3$ and p have the meanings given above, and
$R^4$ to $R^7$ , independently of each other, denote hydrogen or a $C_1$-$C_4$ alkyl,
are reacted in an active polymerisation process to form a prepolymer and the carbon-carbon double bonds of the prepolymer are subsequently hydrogenated in the presence of a homogeneous or heterogeneous catalyst.

**10.** A prepolymer which comprises at least three blocks and which contains at least one hard block and at least one soft block,
wherein the hard block contains at least 65 % by weight of recurring units of general formula (IV),

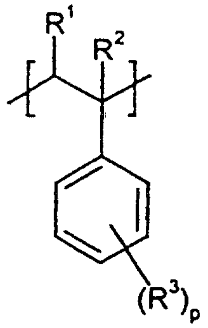

(IV)

wherein
$R^1$, $R^2$, $R^3$ and p have the meanings given above,
and the soft block contains
99 - 50 % by weight of recurring units based on straight chain or branched, aliphatic (optionally olefinic) hydrocarbon chains which comprise 2 to 14 carbon atoms and which are optionally substituted by a $C_1$-$C_4$ alkenyl, and
1 - 50 % by weight of recurring units of general formula (IV).

**11.** Use of the prepolymers according to claim 11 for the production of block copolymers according to claim 1.

**12.** Use of the block copolymers according to claims 1 to 10 for the production of mouldings.

**13.** Mouldings obtainable from block copolymers according to claims 1 to 10.

**14.** Optical data storage media obtainable from block copolymers according to claims 1 to 10.

**Revendications**

**1.** Copolymère séquencé à au moins trois blocs, contenant au moins un bloc dur et au moins un bloc mou, le bloc dur contenant au moins 65 % en poids de motifs répétés de formule générale (I)

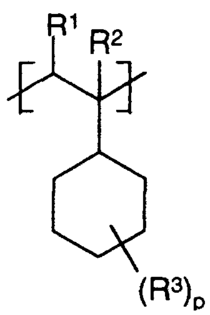

(I)

dans laquelle

| | |
|---|---|
| $R^1$ et $R^2$ | représentent chacun, indépendamment l'un de l'autre, l'hydrogène ou un groupe alkyle en $C_1$-$C_6$, |
| $R^3$ | représente l'hydrogène ou un groupe alkyle en $C_1$-$C_6$ ou un groupe alkylène condensé, |
| p | est un nombre entier égal à 0 ou allant de 1 à 5, |

et le bloc mou contenant

99 à 50 % en poids de motifs répétés à base de groupes alkylène à chaîne droite ou ramifiée en $C_2$-$C_{14}$ et
1 à 50 % en poids de motifs répétés de formule générale (I).

**2.** Copolymère séquencé selon la revendication 1, dont le bloc dur contient au moins 70 % en poids de motifs répétés de formule (I).

**3.** Copolymère séquencé selon la revendication 1, dont le bloc dur contient au moins 75 % en poids de motifs répétés de formule (I).

**4.** Copolymère séquencé selon la revendication 1, dont le bloc dur contient au moins 80 % en poids de motifs répétés de formule (I).

**5.** Copolymère séquencé selon la revendication 1, dont le bloc dur contient au moins 84 % en poids de motifs répétés de formule (I).

**6.** Copolymère séquencé selon les revendications qui précèdent dont le bloc mou contient 95 à 70 % en poids de motifs répétés à base de groupes alkylène à chaîne droite ou ramifiée en $C_2$-$C_{14}$ et 5 à 30 % en poids de motifs répétés de formule générale (I).

**7.** Copolymère séquence selon les revendications qui précèdent dans lequel la proportion des blocs durs, sur le polymère total, représente de 65 à 97 % en poids et la proportion des blocs mous de 3 à 35% en poids.

**8.** Copolymère séquencé selon les revendications qui précèdent, à la structure en blocs suivante :

$$A^i\text{-}(B^i\text{-} A^i)_n;$$

$$B^i\text{-}(A^i\text{-}B^i)_n;$$

$$(A^i\text{-}B^i)_n;$$

A représentant un bloc dur, B un bloc mou,
$n \geq 1$, de préférence égal à 1, 2, 3, 4 et
i est un nombre entier allant de l à n ($l \leq i \leq n$).

**9.** Procédé pour la préparation des copolymères séquences selon les revendications qui précèdent, dans lequel, dans une opération de polymérisation vivante, on fait réagir avec formation d'un prépolymère des monomères vinylaromatiques de formule générale (II) pour les blocs durs et des diènes conjugués de formule générale (III) et des monomères vinylaromatiques de formule générale (II) pour les blocs mous

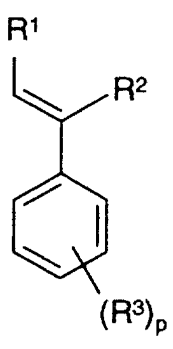

(II)

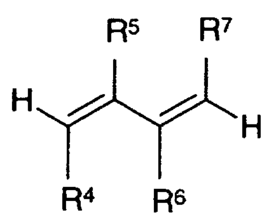

(III)

$R^1$, $R^2$, $R^3$ et p ayant les significations indiquées ci-dessus et
$R^4$ à $R^7$ représentant chacun, indépendamment les uns des autres, l'hydrogène ou un groupe alkyle en $C_1$-$C_4$,
puis on hydrogène les doubles liaisons carbone-carbone du prépolymère en présence d'un catalyseur homogène ou hétérogène.

**10.** Prépolymère à au moins trois blocs, contenant au moins un bloc dur et au moins un bloc mou, le bloc dur contenant au moins 65 % en poids de motifs répétés de formule générale (IV)

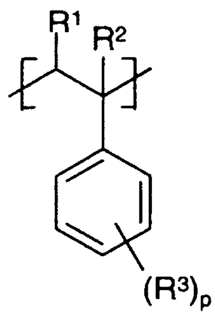

(IV)

dans laquelle

$R^1$, $R^2$, $R^3$ et p ont les significations indiquées ci-dessus,

et le bloc mou contenant

99 à 50 % en poids, de motifs répétés à base de chaînes carbonées aliphatiques (éventuellement oléfiniques), droites ou ramifiées, en $C_2$-$C_{14}$, éventuellement substituées par des groupes alcényle en $C_1$-$C_4$,

1 à 50 % en poids de motifs répétés de formule générale (IV).

**11.** Utilisation des prépolymères selon la revendication 11 pour la préparation des copolymères séquences selon la revendication 1.

**12.** Utilisation des copolymères séquencés selon les revendications 1 à 10 pour la fabrication d'objets moulés.

**13.** Objets moulés obtenus à partir des copolymères séquencés selon les revendications 1 à 10.

**14.** Banques de données optiques obtenues à partir de copolymères séquencés selon les revendications 1 à 10.